# EUROPÄISCHE PATENTSCHRIFT

(11) **EP 2 632 639 B1**
(45) Veröffentlichungstag und Bekanntmachung des Hinweises auf die Patenterteilung: **06.04.2016**
(21) Anmeldenummer: 12762224.9
(22) Anmeldetag: 19.09.2012
(51) Int. Cl.: H02P 29/00

(54) **SPANNVORRICHTUNG MIT EINEM ELEKTROMOTOR**
CLAMPING DEVICE WITH AN ELECTRIC MOTOR
DISPOSITIF DE SERRAGE DOTÉ D'UN MOTEUR ÉLECTRIQUE

(30) Priorität: 19.09.2011 DE 102011113765
(43) Veröffentlichungstag der Anmeldung: 04.09.2013
(73) Patentinhaber: Ludwig Ehrhardt GmbH, 35321 Laubach (DE)
(72) Erfinder: KRÖLL, Harald, 35321 Laubach (DE); WÖRNER, Stefan, 35516 Münzenberg (DE); HEIDT, Nikolaus, 35423 Lich (DE)
(74) Vertreter: Beier, Ralph
(86) Internationale Anmeldenummer: PCT/EP2012/003905
(87) Internationale Veröffentlichungsnummer: WO 2013/041219

(56) Entgegenhaltungen:
- EP-A2- 1 533 080
- WO-A1-2006/030520
- DE-A1- 19 517 345
- FR-A1- 2 776 858

## Beschreibung

Die Erfindung betrifft eine Spannvorrichtung, wie beispielsweise einen Schwenkspanner, einen Maschinenschraubstock, ein Abstützelement oder einen Blockzylinder. Derartige Spannvorrichtungen sind beispielsweise aus DE 102 05 601 A1, DE 102 52 549 A1, DE 33 34 401 A1 und DE 197 52 671 A1 bekannt, wobei derartige Spannvorrichtungen bisher meist hydraulisch angetrieben wurden und Positionssensoren aufweisen, welche die Position (gespannt bzw. entspannt) der Spannvorrichtung ermitteln. Weiterhin ist es aus dem Stand der Technik bekannt, derartige Spannvorrichtungen durch einen Elektromotor anzutreiben, wobei jedoch bisher ebenfalls Positionssensoren zum Einsatz kamen, um die Position (gespannt bzw. entspannt) der Spannvorrichtung zu ermitteln.

Nachteilig an diesen bekannten Spannvorrichtungen ist also die Tatsache, dass zur Ermittlung der Position (gespannt bzw. entspannt) separate Positionssensoren erforderlich sind.

Aus DE 195 17 345 A1 ist eine Spannvorrichtung gemäß dem Oberbegriff von Anspruch 1 bekannt, bei der das Spannelement von einem Elektromotor angetrieben wird. Hierbei kann die Spannkraft der Spannvorrichtung aus dem Drehmoment und damit aus der Stromaufnahme des Elektromotors berechnet werden. Der Elektromotor kann dann abgeschaltet werden, wenn die Stromaufnahme einen bestimmten vorgegebenen Wert erreicht, der der gewünschten Spannkraft entspricht. Dieses Verfahren erfordert jedoch eine sehr genaue und dynamische Messung der Stromaufnahme.

Ferner ist zum Stand der Technik hinzuweisen auf DE 10 2010 044 783 A1, DE 36 38 526 C1 und DE 30 31 368 A1.

Schließlich ist zum allgemeinen technischen Hintergrund noch hinzuweisen auf EP 1 533 080.A2, WO 2006/030520 A1 und FR 2 776 858 A1.

Der Erfindung liegt deshalb die Aufgabe zugrunde, die bekannten Spannvorrichtungen entsprechend zu verbessern.

Diese Aufgabe wird durch eine erfindungsgemäße Spannvorrichtung gemäß dem Hauptanspruch 1 bzw. durch ein entsprechendes Betriebsverfahren gemäß dem Hauptanspruch 8 gelöst.

Die Erfindung beruht auf der technischen Erkenntnis, dass bei einer elektromotorisch angetriebenen Spannvorrichtung die elektrischen Betriebsgrößen (z.B. der Motorstrom) des als Antrieb verwendeten Elektromotors einen Rückschluss zulassen auf die mechanische Belastung des Elektromotors und damit auch auf die auf das Spannelement wirkende Spannkraft.

Die Erfindung umfasst deshalb die allgemeine technische Lehre, die elektrischen Betriebsgrößen des als Antrieb verwendeten Elektromotors als Maß für die Spannkraft zu messen, um daraus abzuleiten, wann das Spannelement bei einem Spannvorgang auf das Werkstück aufläuft.

Nach dem Auflaufen auf das Werkstück wird dann die Anzahl der Umdrehungen des Elektromotors gezählt, um daraus die Spannkraft abzuleiten. Beim Erreichen der gewünschten Spannkraft kann der Elektromotor dann abgeschaltet werden. Zur Festlegung des Abschaltzeitpunktes muss also lediglich die Anzahl der Umdrehungen des Elektromotors seit dem Auflaufen auf das Werkstück gezählt werden. Eine Messung der Stromaufnahme ist hierzu jedoch nicht zwingend erforderlich.

Die erfindungsgemäße Spannvorrichtung umfasst ein bewegliches Spannelement zum Spannen eines Werkstücks mit einer bestimmten Spannkraft. Darüber hinaus weist die erfindungsgemäße Spannvorrichtung einen Elektromotor zum mechanischen Antrieb des Spannelements auf, wobei eine Steuereinheit vorgesehen ist, die den Elektromotor ansteuert. Die Erfindung sieht nun vor, dass die Steuereinheit eine elektrische Betriebsgröße (z.B. Motorstrom) des Elektromotors als Maß für die Spannkraft erfasst.

Gemäß der Erfindung weist die Spannvorrichtung ein erstes Federelement (z.B. ein Tellerfederpaket) auf, das bei einem Spannvorgang belastet und bei einem Entspannvorgang entlastet wird.

Hierbei ist vorzugsweise vorgesehen, dass das Spannelement bei einem Spannvorgang in einer bestimmten Spannrichtung bewegt wird, wobei das erste Federelement das Spannelement mit einer bestimmten Federkraft entweder in der Spannrichtung oder entgegen Spannrichtung (z.B. bei einem Schwenkspanner) drückt, so dass die Federkraft des ersten Spannelements im Wesentlichen gleich der Spannkraft ist, die das Spannelement auf das Werkstück ausübt.

Vorzugsweise ist zusätzlich ein zweites Federelement vorgesehen, das bei einem Entspannvorgang belastet und bei einem Spannvorgang entlastet wird, wobei das zweite Federelement bei einem Entspannvorgang eine reibschlüssige Verbindung zwischen dem Elektromotor und dem Spannelement bildet.

In einem bevorzugten Ausführungsbeispiel der Erfindung ist die Spannvorrichtung ein Schwenkspanner, wobei das Spannelement zum Spannen oder Entspannen des Werkstücks entlang einer Spannrichtung linear verschiebbar ist, wohingegen das Spannelement im entspannten Zustand schwenkbar ist, insbesondere rechtwinklig zu der Spannrichtung. Hierbei bewirkt die reibschlüssige Verbindung zwischen dem Elektromotor und dem Spannelement in Verbindung mit der Drehbewegung des Elektromotors eine Schwenkbewegung des Spannelements.

Darüber hinaus weist die Spannvorrichtung vorzugsweise einen Spindelantrieb auf. Der Spindelantrieb umfasst einen axial verschiebbaren Kolben, der das Spannelement trägt, sowie eine mit dem Kolben verbundene Spindelmutter. Weiterhin umfasst der Spindelantrieb eine von dem Elektromotor drehbar angetriebene Spindel, die in die Spindelmutter eingreift und eine Drehbewegung des Elektromotors in eine Linearbewegung des Kolbens und damit auch des Spannelements umwandelt.

Ferner ist vorzugsweise eine Kulissensteuerung vorgesehen, die zu Beginn eines Spannvorgangs und am Ende eines Entspannvorgangs nur eine Schwenkbewegung des Spannelements erlaubt und ansonsten nur eine Linearbewegung des Spannelements erlaubt.

Im Rahmen der Erfindung bestehen verschiedene Möglichkeiten zur konstruktiven Ausbildung der Spannvorrichtung. So lässt sich das erfindungsgemäße Prinzip beispielsweise bei Schwenkspannern, Abstützelementen, Maschinenschraubstöcken oder Blockzylindern realisieren.

Ferner ist zu erwähnen, dass die als Maß für die Spannkraft gemessene elektrische Betriebsgröße des Elektromotors vorzugsweise der Motorstrom ist. Im Rahmen der Erfindung können jedoch auch andere elektrische Betriebsgröße gemessen werden, die einen Rückschluss auf die mechanische Belastung erlauben.

In einem bevorzugten Ausführungsbeispiel der Erfindung ist vorgesehen, dass die Steuereinheit einen Spannvorgang in Abhängigkeit von der gemessenen elektrischen Betriebsgröße des Elektromotors beendet, wobei der Spannvorgang beendet wird, wenn die gemessene elektrische Betriebsgröße der gewünschten Spannkraft entspricht.

Wenn die Spannvorrichtung mit dem Spannelement auf das zu spannende Werkstück aufläuft, so wird das Federelement gespannt und der von dem Elektromotor gezogene Strom steigt an. Dieser Stromanstieg wird vorzugsweise ausgewertet, da er das Auflaufen der Spannvorrichtung auf das Werkstück und damit den Beginn des eigentlichen Spannvorgangs anzeigt. Bei dem folgenden Spannvorgang wird dann das erste Federelement gespannt, wobei die Umdrehungen des Elektromotors gezählt werden. Anschließt kann dann aus der Anzahl der Umdrehungen des Elektromotors nach dem Auflaufen und der bekannten Federkennlinie die Spannkraft berechnet werden. Die Spannkraft kann dadurch als Stellgröße, Messgröße und Größe für eine Nachregelung verwendet werden. Beispielsweise ermöglicht dies folgende Varianten der Erfindung:
- Variieren der Spannkraft durch Vorgabe eines Sollwerts,
- Ermitteln der tatsächlichen Spannkraft,
- Nachregeln der Spannkraft im gespannten Zustand bei äußeren Einflüssen, wie beispielsweise Vibrationen.

Weiterhin ist vorzugsweise vorgesehen, dass die Steuereinheit einen Entspannvorgang in Abhängigkeit von der gemessenen elektrischen Betriebsgröße des Elektromotors beendet, wobei der Entspannvorgang beendet wird, wenn die gemessene elektrische Betriebsgröße einer gewünschten Reibkraft der reibschlüssigen Verbindung zwischen dem Elektromotor und dem Spannelement entspricht.

Bei den vorstehend erwähnten Federelementen handelt es sich vorzugsweise um Tellerfederpakte, jedoch ist die Erfindung grundsätzlich auch mit anderen Federtypen realisierbar. Ferner kann die Spannvorrichtung einen baulich integrierten Stromspeicher (z.B. Akku) aufweisen, um zumindest vorübergehend eine netzunabhängige Stromversorgung des Elektromotors zu ermöglichen.

In einem bevorzugten Ausführungsbeispiel umfasst die Spannvorrichtung eine Platine, auf der die Steuereinheit angeordnet ist, wobei die Platine um den Elektromotor gefaltet ist, was vorteilhaft zu einer Platzersparnis führt.

Darüber hinaus kann die Spannvorrichtung einen Ausgang aufweisen zur Ausgabe der Spannkraft oder des Spannweges, die aus der gemessenen Betriebsgröße abgeleitet ist.

Ferner umfasst die Erfindung auch ein entsprechendes Steuerverfahren für eine Spannvorrichtung.

Bei einem Schwenkspanner werden bei einem Spannvorgang vorzugsweise folgende Schritte ausgeführt:
- Starten des Elektromotors mit einer geringen Drehzahl zum Schwenken des Spannelements in die Spannposition unter Ausnutzung einer reibschlüssigen Verbindung zwischen Elektromotor und Spannelement,
- Betrieb des Elektromotors mit einer geringen Drehzahl zum Lösen einer reibschlüssigen Verbindung zwischen dem Elektromotor und dem Spannelement, und/oder
- Messen der elektrischen Betriebsgröße des Elektromotors während des Spannvorgangs, und/oder
- Überprüfen, ob die gemessene elektrische Betriebsgröße anzeigt, dass die reibschlüssige Verbindung zwischen dem Elektromotor und dem Spannelement gelöst ist, und/oder
- Anheben der Drehzahl des Elektromotors, wenn die reibschlüssige Verbindung zwischen dem Elektromotor und dem Spannelement gelöst ist, und/oder
- Messen der elektrischen Betriebsgröße des Elektromotors während des Spannvorgangs, und/oder
- Überprüfen, ob die gemessene elektrische Betriebsgröße anzeigt, dass das Spannelement auf das Werkstück aufgelaufen ist, und/oder
- Verringern der Drehzahl des Elektromotors, wenn das Spannelement auf das Werkstück aufgelaufen ist,
- Spannen des Federelements,
- Messen der elektrischen Betriebsgröße des Elektromotors während des Spannvorgangs, und/oder
- Überprüfen, ob die gemessene elektrische Betriebsgröße anzeigt, dass die gewünschte Spannkraft erreicht ist,
- Abschalten des Elektromotors, wenn die gewünschte Spannkraft erreicht ist.

Weiterhin werden bei einem Schwenkspanner bei einem Entspannvorgang vorzugsweise folgende Schritte ausgeführt:
- Starten des Elektromotors mit einer geringen Drehzahl zum Abbauen der Spannkraft, und/oder
- Messen der elektrischen Betriebsgröße des Elektromotors während des Entspannvorgangs, und/oder
- Überprüfen, ob die gemessene elektrische Betriebsgrößen anzeigt, dass die Spannkraft abgebaut ist, und/oder
- Anheben der Drehzahl des Elektromotors, wenn die Spannkraft abgebaut ist, und/oder
- Messen der elektrischen Betriebsgröße des Elektromotors während des Entspannvorgangs, und/oder
- Erhöhen des Reibschlusses zwischen Elektromotor und Spannelement durch Spannen des Federelements, und/oder
- Schwenken des Spannelements in die Entspannstellung mit geringer Drehzahl, und/oder
- weitere Erhöhung des Reibschlusses zwischen Elektrometer und Spannelement, und/oder
- Überprüfen, ob die gemessene elektrische Betriebsgröße anzeigt, dass die reibschlüssige Verbindung zwischen dem Elektromotor und dem Spannelement eine gewünschte Reibkraft aufweist, und/oder
- Abschalten des Elektromotors, wenn die gewünschte Reibkraft erreicht ist.

Bei einem Blockzylinder werden bei einem Spannvorgang vorzugsweise folgende Schritte ausgeführt:
- Starten des Elektromotors mit einer geringen Drehzahl zum Lösen einer reibschlüssigen Verbindung zwischen dem Elektromotor und dem Spannelement, und/oder
- Messen der elektrischen Betriebsgröße des Elektromotors während des Spannvorgangs, und/oder
- Überprüfen, ob die gemessene elektrische Betriebsgröße anzeigt, dass die reibschlüssige Verbindung zwischen dem Elektromotor und dem Spannelement gelöst ist, und/oder
- Anheben der Drehzahl des Elektromotors, wenn die reibschlüssige Verbindung zwischen dem Elektromotor und dem Spannelement gelöst ist, und/oder
- Messen der elektrischen Betriebsgröße des Elektromotors während des Spannvorgangs, und/oder
- Überprüfen, ob die gemessene elektrische Betriebsgröße anzeigt, dass das Spannelement auf das Werkstück aufgelaufen ist, und/oder
- Verringern der Drehzahl des Elektromotors, wenn das Spannelement auf das Werkstück aufgelaufen ist,
- Spannen des Federelements,
- Messen der elektrischen Betriebsgröße des Elektromotors während des Spannvorgangs, und/oder
- Überprüfen, ob die gemessene elektrische Betriebsgröße anzeigt, dass die gewünschte Spannkraft erreicht ist,
- Abschalten des Elektromotors, wenn die gewünschte Spannkraft erreicht ist.

Zum Entspannen werden bei einem Blockzylinder dagegen vorzugsweise folgende Schritte ausgeführt:
- Starten des Elektromotors mit einer geringen Drehzahl zum Abbauen der Spannkraft, und/oder
- Messen der elektrischen Betriebsgröße des Elektromotors während des Entspannvorgangs, und/oder
- Überprüfen, ob die gemessene elektrische Betriebsgröße anzeigt, dass die Spannkraft abgebaut ist, und/oder
- Anheben der Drehzahl des Elektromotors , wenn die Spannkraft abgebaut ist, und/oder
- Messen der elektrischen Betriebsgröße des Elektromotors während des Entspannvorgangs, und/oder
- Spannen des Federelements,
- Messen der elektrischen Betriebsgröße des Elektromotors während des Entspannvorgangs, und/oder
- Überprüfen, ob die gemessene elektrische Betriebsgröße anzeigt, dass die gewünschte Entspannkraft erreicht ist,
- Abschalten des Elektromotors, wenn die gewünschte Entspannkraft erreicht ist.

Bei einem Maschinenschraubstock werden bei einem Spannvorgang vorzugsweise folgende Schritte ausgeführt:
- Starten des Elektromotors mit hoher Drehzahl, und/oder
- Messen der elektrischen Betriebsgröße des Elektromotors während des Spannvorgangs, und/oder
- Überprüfen, ob die gemessene elektrische Betriebsgröße anzeigt, dass das Spannelement auf das Werkstück aufgelaufen ist, und/oder
- Verringern der Drehzahl des Elektromotors, wenn das Spannelement auf das Werkstück aufgelaufen ist,
- Spannen des Federelements,
- Messen der elektrischen Betriebsgröße des Elektromotors während des Spannvorgangs, und/oder
- Überprüfen, ob die gemessene elektrische Betriebsgröße anzeigt, dass die gewünschte Spannkraft erreicht ist,
- Abschalten des Elektromotors, wenn die gewünschte Spannkraft erreicht ist.

Bei einem Entspannvorgang eines Maschinenschraubstocks werden vorzugsweise folgende Schritte ausgeführt:
- Starten des Elektromotors mit einer geringen Drehzahl zum Abbauen der Spannkraft, und/oder
- Messen der elektrischen Betriebsgröße des Elektromotors während des Entspannvorgangs, und/oder
- Überprüfen, ob die gemessene elektrische Betriebsgröße anzeigt, dass die Spannkraft abgebaut ist, und/oder
- Anheben der Drehzahl des Elektromotors, wenn die Spannkraft abgebaut ist, und/oder
- Messen der elektrischen Betriebsgröße des Elektromotors während des Entspannvorgangs, und/oder
- Fahren in die Entspannposition, definiert über den Weg bzw. durch einen Endlagenschalter, Abschalten des Elektromotors.

Bei einem Spannvorgang eines Abstützelements werden vorzugsweise folgende Schritte ausgeführt:
- Starten des Elektromotors mit hoher Drehzahl, und/oder
- Messen der elektrischen Betriebsgröße des Elektromotors während des Anlegevorgangs, und/oder
- bei Erreichen der Vorabschaltposition Verringern der Drehzahl des Elektromotors,
- Messen der elektrischen Betriebsgröße des Elektromotors während des Anlegevorgangs, und/oder
- Überprüfen, ob die gemessene elektrische Betriebsgröße anzeigt, dass das Spannelement auf das Werkstück aufgelaufen ist, wenn ja, sofortiges Abschalten des Elektromotors , und/oder
- Überprüfen, ob die Reibkupplung angesprochen hat, wenn ja, sofortiges Abschalten des Elektromotors.

Zum Entspannen eines Abstützelements werden dagegen vorzugsweise folgende Schritte ausgeführt:
- Starten des Elektromotors mit hoher Drehzahl zum Abbauen der Anlegekraft, und/oder
- Messen der elektrischen Betriebsgröße des Elektromotors während des Entspannvorgangs, und/oder
- Fahren in die Entspannposition, definiert durch einen Endlagenschalter, Abschalten des Elektromotors.

Andere vorteilhafte Weiterbildungen der Erfindung sind in den Unteransprüche gekennzeichnet oder werden nachstehend zusammen mit der Beschreibung der bevorzugten Ausführungsbeispiele der Erfindung anhand der Figuren näher erläutert. Es zeigen:
- Figur 1A: eine Querschnittsansicht durch einen erfindungsgemäßen Schwenkspanner,
- Figur 1B: eine Perspektivansicht des Schwenkspanners aus Figur 1A,
- Figur 1C: eine Detailansicht aus Figur 1A im Bereich eines Tellerfederpakets,
- Figur 2A: eine Querschnittsansicht durch ein erfindungsgemäßes Abstützelement entlang der Schnittlinie A-A in Figur 2D,
- Figur 2B: eine Querschnittsansicht durch ein erfindungsgemäßes Abstützelement entlang der Schnittlinie B-B in Figur 2E,
- Figur 2C: eine Perspektivansicht des Abstützelements aus den Figuren 2A-2B,
- Figur 2D: eine Aufsicht auf das Abstützelement gemäß den Figuren 2A-2C,
- Figur 3A: eine Perspektivansicht eines erfindungsgemäßen Maschinenschraubstocks,
- Figur 3B: eine Querschnittsansicht des Maschinenschraubstocks gemäß Figur 3A,
- Figur 4A: eine Perspektivansicht eines erfindungsgemäßen Blockzylinders,
- Figur 4B: eine Querschnittsansicht des Blockzylinders gemäß Figur 4A,
- Figur 5A: ein Flussdiagramm zur Verdeutlichung eines Spannvorgangs des Schwenkspanners aus den Figuren 1A-1C,
- Figur 5B: ein Flussdiagramm zur Verdeutlichung eines Entspannvorgangs des Schwenkspanners aus den Figuren 1A-1C.

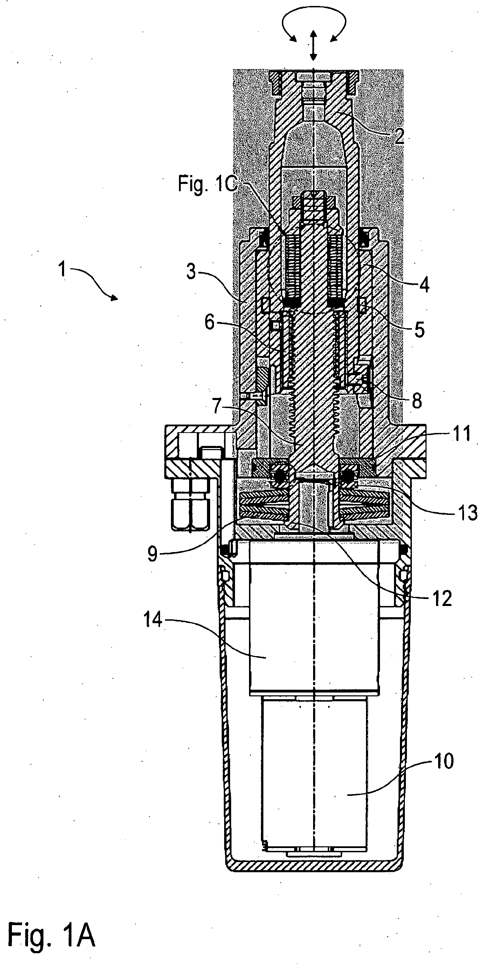

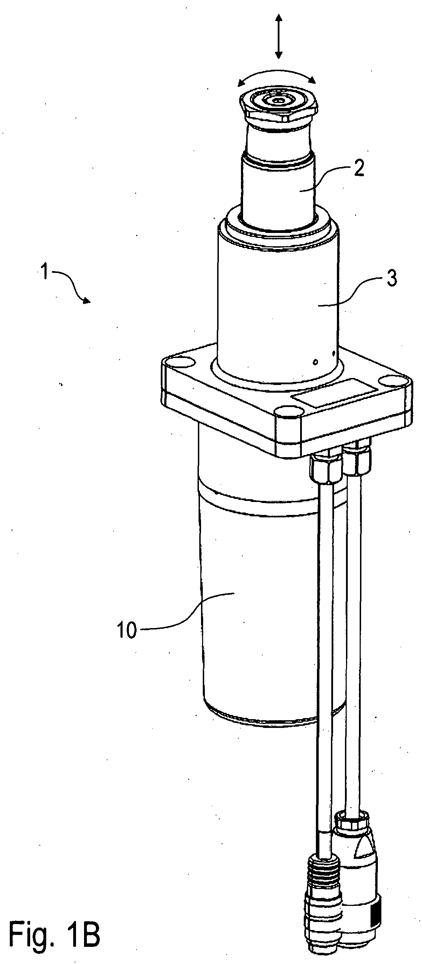

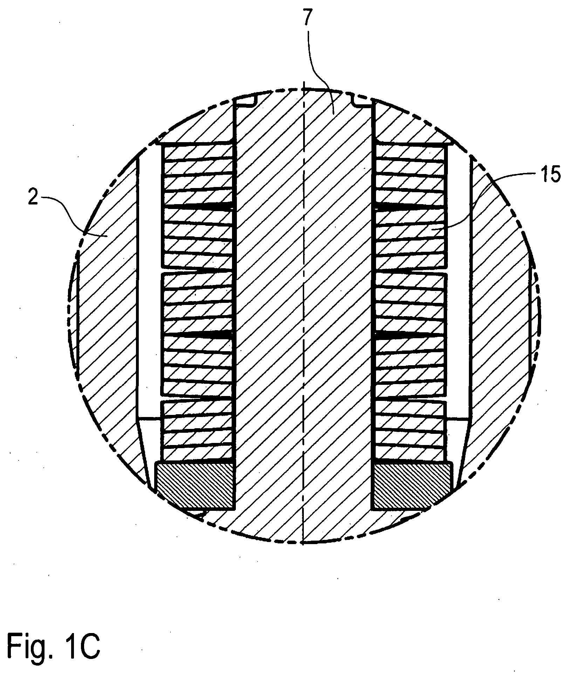

Die Figuren 1A-1C zeigen verschiedene Ansichten eines erfindungsgemäße Schwenkspanners 1, der aus mehreren Baugruppen besteht, die nachfolgend beschrieben werden.

Eine sogenannte Führungsbaugruppe besteht im Wesentlichen aus einem Kolben 2 und einer zugehörigen Kulissenführung. Eine optimale Führung bedeutet, dass ein guter Wirkungsgrad und geringe Reibungsverluste bestehen. Die Führung des Kolbens 2 erfolgt über eine, in ein Gehäuse 3 eingepresste Führungsbuchse 4.

Zusätzlich kommt ein fettgetränkter Filzring 5 zur Reibungsminimierung zum Einsatz. Der Filzring 5 schmiert die Führungsfläche des Kolbens 2 kontinuierlich bei jedem Hub. Das permanente Schmieren der Führungsfläche verringert die Reibung zwischen den Kontaktflächen des Kolbens 2 und der Führungsbuchse 4 zusätzlich zu deren Selbstschmiereigenschaften. Eine Kulissenführung, die in die Führungsbuchse 4 integriert ist, übernimmt die Führung des Kolbens 2 gegen Verdrehen im Spannbereich sowie die Führung und Begrenzung der Schwenkbewegung. Die Kulissenführung ist notwendig, damit das Spanneisen, das auf dem Kolben 2 in beliebiger Winkellage befestigt werden kann, eine in jedem Zyklus gleich bleibende definierte Stellung einnehmen kann. Bei ungeführtem Kolben 2 dagegen würde es durch die Bewegungsfreiheit des Spindel-Muttertriebes zur undefinierten Stellung des Spanneisens kommen und es wäre kein, immer auf den gleichen Punkt gerichtetes Spannen mehr möglich. Das lässt sich dadurch erklären, dass eine Spindelmutter 6 fest mit dem Kolben 2 verbunden ist und somit zwangsläufig dieselben Bewegungen ausführen muss. Das bedeutet, dass bei ausgeführter Axialbewegung auch immer eine, durch Reibung zwischen der Spindelmutter 6 und einer Spindel 7 entstandene, unbestimmte Drehbewegung zustande kommt. Ein Kulissenstein 8 sitzt auf dem Kolben 2 und führt den Kolben 2 durch die Nut in der Führungsbuchse 4. Die entstehende Bewegung ist solange axial, bis der Kulissenstein 8 in der Schwenknut frei wird und damit eine, durch die Spindelreibung erzeugte, Schwenkbewegung zulässt. Der Kulissenstein 8 läuft gegen einen, durch den gewünschten Schwenkwinkel definierten, Anschlag. Dort werden die Spindel 7, die Spindelmutter 6 und die Tellerfedern 9 axial gegeneinander festgezogen. Durch das Festziehen wird die Reibung zwischen der Spindel 7 und der Spindelmutter 6 deutlich erhöht und somit eine reibschlüssige Verbindung hergestellt. Dieser Reibschluss bewirkt, dass der Kolben 2 der Drehbewegung der Spindel 7 folgt und somit die Schwenkbewegung durchführt.

Eine weitere Baugruppe des Schwenkspanners 1 umfasst im Wesentlichen den Spindelmutterantrieb mit weiteren Funktionsbauteilen.

Der Spindel-Mutterntrieb ist das Bewegungselement des elektromechanischen Schwenkspanners 1. Die Spindel 7 wird von einem Elektromotor 10 angetrieben. Die Spindelmutter 6, die fest mit dem Kolben 2 verbunden ist, verfährt beim Spannen nach unten und beim Entspannen nach oben. Die Spindelmutter 6 wird über ein Feingewinde in den Kolben 2 geschraubt. Die Spindelmutter 6 fährt beim Entspannen auf eine Scheibe 11 auf und drückt die Tellerfedern 9 zusammen. Das Zusammendrücken der Tellerfedern 9 bewirkt eine höhere Stromaufnahme des Elektromotors 10. Die Steuerung erkennt dies und bremst den Elektromotor 10 ab. Somit wird das harte gegen den Block fahren verhindert.

Im Bereich der Mutternbewegung wird ein Schmierstoff hin und her geschoben, der die Reibung zwischen Spindel 7 und Spindelmutter 6 gering halten soll. Durch die Bewegung des Schmierstoffes wird eine dauerhafte Benetzung der Spindel 7 mit Schmierstoff erreicht. Der Schmierstoff wird während der Montage eingefüllt und kann bei Bedarf, durch eine mit einer Verschlussschraube verschlossene Bohrung nachgeschmiert werden.

Beim Spannen fährt die Spindelmutter 6 auf die Scheibe 11 auf, dadurch wird die Spindel 7 nach oben gezogen. Die Spindel 7 ist fest verbunden mit einer Motorwellenbuchse 12, d.h. wenn sich die Spindel 7 nach oben zieht, wird auch die Motorwellenbuchse 12 nach oben gezogen. Die Motorwellenbuchse 12 stützt sich über die Tellerfedern 9, ein Axialrillenkugellager 13 und die Scheibe 11 auf dem Gehäuse 3 ab. Das Zusammendrücken der unteren Tellerfedern 9 verhindert auch, wie oben beschrieben, das harte gegen den Block fahren.

Eine weitere Baugruppe des erfindungsgemäßen Schwenkspanners 1 ist die Antriebseinheit, die den Elektromotor 10 aufweist, dem ein Getriebe 14 nachgeschaltet ist. Die an dem Getriebe 14 abgehende Welle überträgt das Drehmoment über eine Welle-Nabenverbindung auf die Motorwellenbuchse 12 zwischen der Motorwelle und Spindel 7. Über den Spindelmutterantrieb wird die Drehbewegung der Motorwelle in eine lineare Bewegung, das Aus- bzw. Einfahren des Kolbens 2, umgewandelt.

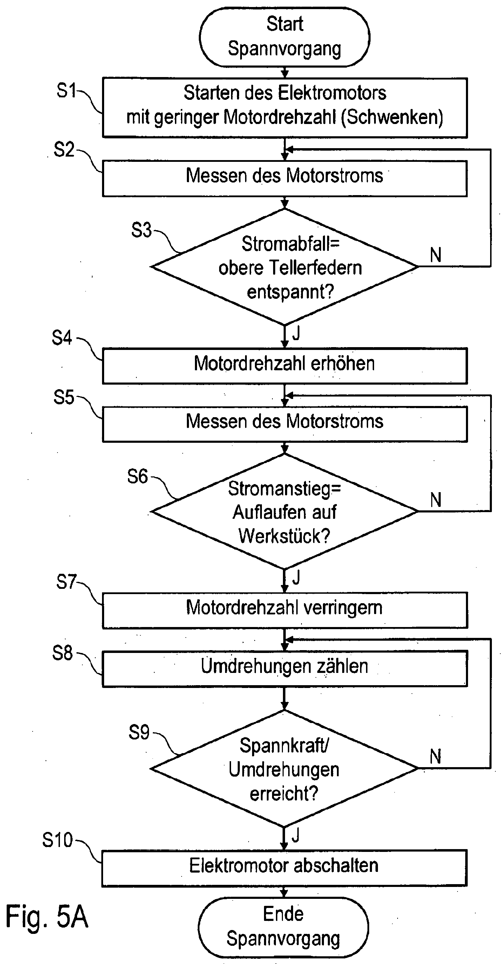

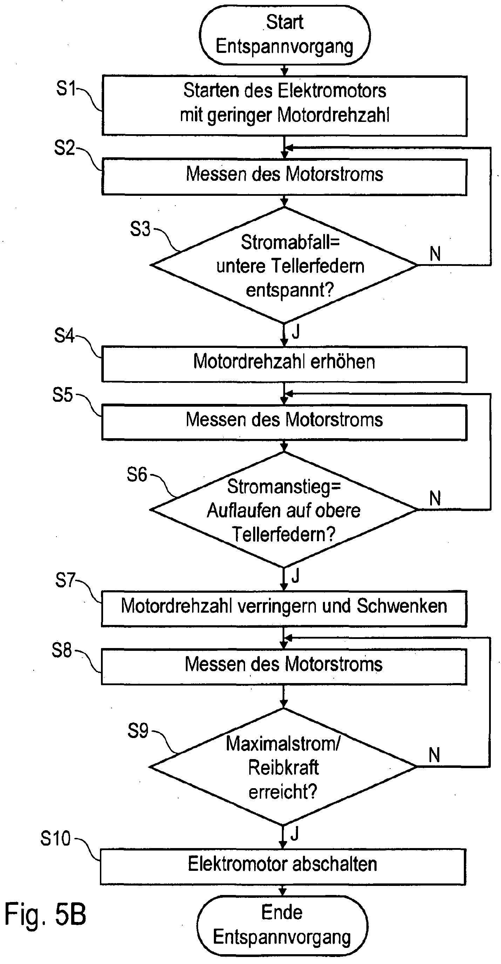

Im Folgenden wird zunächst ein Spannvorgang des erfindungsgemäßen Schwenkspanners 1 beschrieben, wobei auf das Flussdiagramm gemäß Figur 5A Bezug genommen wird.

Beim Spannvorgang des elektromechanischen Schwenkspanners 1 wird ein Werkstück (nicht dargestellt) auf einen Arbeitstisch (nicht dargestellt) gespannt. Hierbei laufen folgende Arbeitsschritte ab: In der Ausgangsstellung steht der elektromechanische Schwenkspanner 1 in der Entspannposition und die Spindelmutter 6 ist gegen obere Tellerfedern 15 festgezogen. Der Elektromotor 10 überträgt das Drehmoment mittels Wellen-Nabenverbindung auf die Motorwellenbuchse 12 und damit auf die Spindel 7. Der Elektromotor 10 dreht zunächst (Schritt S1) mit geringer Drehzahl, wobei der Motorstrom gemessen wird (Schritt S2). Durch die reibschlüssige Verbindung zwischen der Spindel 7 und der Spindelmutter 6 schwenkt der Kolben 2 mit dem an dem Kolben 2 angebrachten Spanneisen (nicht dargestellt) in die Spannstellung. Der Kulissenstein 8 in der Führung definiert die Endpunkte der Schwenkbewegung. Durch das Anschlagen des Kulissensteins 8 wird die Schwenkbewegung beendet, dadurch führt der Kolben 2 einen Axialhub durch, der die reibschlüssige Verbindung löst (Schritt S3). Der Elektromotor 10 fährt mit hoher Drehzahl weiter (Schritt S4), wobei laufend der Motorstrom gemessen wird (Schritt S5), bis der Kolben 2 mit dem daran montierten Spanneisen auf das zu spannende Werkstück auffährt (Schritt S6). Dadurch entsteht eine höhere Stromaufnahme und die Drehzahl wird von der Steuerung reduziert (Schritt S7). Durch das Auffahren auf das Werkstück werden die Spindel 7 und damit auch die daran fest verschraubte Motorwellenbuchse 12 auf der Getriebeausgangswelle nach oben gezogen. Die dadurch erreichte Spannkraft wird über die auf dem Bund der Motorwellenbuchse 12 sitzenden Tellerfedern 9 und das Axialrillenkugellager 13 über die Scheibe 11 auf das Gehäuse 3 geleitet. Die Spannkraft wird komplett von dem Gehäuse 3 und nicht von dem Elektromotor 10 aufgenommen. Der Antrieb fährt so lange, bis eine gewünschte Spannkraft erreicht ist, die einer bestimmten Anzahl von Umdrehungen ab dem Auffahren auf das Werkstück entspricht (Schritt S9). Danach wird der Elektromotor 10 abgeschaltet und der Spannvorgang ist beendet (Schritt S10). Die Steigung der Spindel 7 und Spindelmutter 6 ist selbsthemmend ausgelegt, dadurch bleibt die Spannkraft ohne Stromzufuhr erhalten.

Im Folgenden wird nun ein Entspannvorgangs des erfindungsgemäßen Schwenkspanners 1 beschrieben.

Beim Entspannen fährt der Elektromotor 10 zunächst mit niedriger Drehzahl, um die Vorspannung der unteren Tellerfedern 9 aufzuheben (Schritt S1), wobei laufend der Motorstrom gemessen wird. Nach dem Lösen (Schritt S3) dreht der Elektromotor 10 mit hoher Drehzahl (Schritt S4) und der Kolben 2 führt einen axialen Hub durch. Die Spindelmutter 6 mit dem Kolben 2 fährt entlang der Kulissenführung auf die oberen Tellerfedern 15 auf (Schritt S6) und die Drehzahl wird verringert (Schritt S7). Die Spindelmutter 6 zieht sich gegen die oberen Tellerfedern 15 fest. Durch das Festziehen wird die Reibung zwischen der Spindel 7 und der Spindelmutter 6 deutlich erhöht und somit eine reibschlüssige Verbindung hergestellt. Dieser Reibschluss bewirkt, dass der Kolben 2 der Drehbewegung der Spindel 7 folgt und somit die Schwenkbewegung des Kolbens 2 mit dem daran befestigen Spanneisen durchführt. Das Spanneisen schwenkt, unter der Ausnutzung dieser Reibung, um den geforderten Schwenkwinkel und der Kulissenstein 8 schlägt am Ende der Schwenknut an. Nach dem Erreichen des Schwenknutendes wird der Federweg ausgenutzt, um die Spindelmutter 6 fest zu ziehen. Der daraus resultierende Reibungseffekt wird bei dem Spannvorgang zum Zurückschwenken des Spanneisens benötigt. Der Antrieb fährt so lange, bis eine Stromaufnahme erreicht ist, die der gewünschten Reibkraft entspricht (S9). Danach wird der Elektromotor 10 abgeschaltet und der Entspannvorgang ist beendet (Schritt S10).

Im Folgenden werden nun Besonderheiten der Tellerfedern 9, 15 beschrieben.

Die Tellerfedern 9, 15 sind kegelförmige Ringschalen, die als Einzelteller oder kombiniert zu Federpaketen und Federsäulen in axialer Richtung belastet werden. In der Konstruktion sind die Tellerfedern 9, 15 als Tellerfederpakte ausgebildet. Auf die unteren Tellerfedern 9 fährt die Spindelmutter 6 beim Spannen auf, wohingegen die Spindelmutter 6 beim Entspannen auf die oberen Tellerfedern 15 aufläuft. Wenn der Elektromotor 10 auf die unteren Tellerfedern 9 auffährt, ergibt sich ein erhöhter Kraftbedarf an der Spindel 7. Dieser fordert einen höheren Strom, der an die Steuerung gemeldet wird. Die Steuerung reagiert darauf und schaltet den Elektromotor 10 innerhalb des Federwegs ab. Das ansonsten harte und mit großen Bauteilbelastungen verbundene, gegen den Block fahren wird somit abgefangen. Nach dem Abbremsen des Elektromotors 10 wird mit einer geringeren Verfahrgeschwindigkeit und damit geringeren Motordrehzahl auf die geforderte Spannkraft verfahren. Hierbei hält die Tellerfeder 9 die geforderte Spannkraft aufrecht. Außerdem werden gleichzeitig eventuell auftretende Setzverluste, durch äußere Einwirkungen, wie z.B. unterschiedliche Temperaturen ausgeglichen. Die Tellerfedern 9 werden für die Erhaltung der Spannkraft eingesetzt, die zu jedem Zeitpunkt des Spannens gleich groß bleiben soll. Eine weitere Aufgabe der Tellerfedern 9 ist das Auffangen, des bei dem Elektromotor 10 auftretenden Trägheitsmomentes. Dabei werden die Bauteile vor zu großen Belastungen geschützt, wenn des Spanneisen auf das Werkstück auftrifft. Der Federweg gibt der Steuerung die Zeit zum Regeln des Ablaufes und verhindert dadurch zu große Belastungen, was die Lebensdauer des gesamten Schwenkspanners 1 deutlich erhöht. Für die oberen Tellerfedern 15 gelten die gleichen Anforderungen wie für die unteren Tellerfedern.

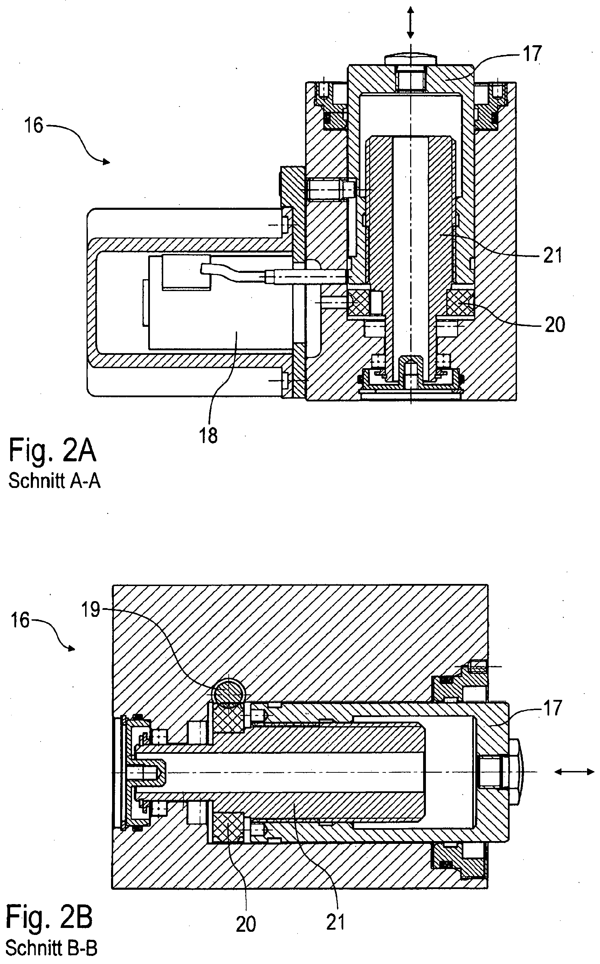

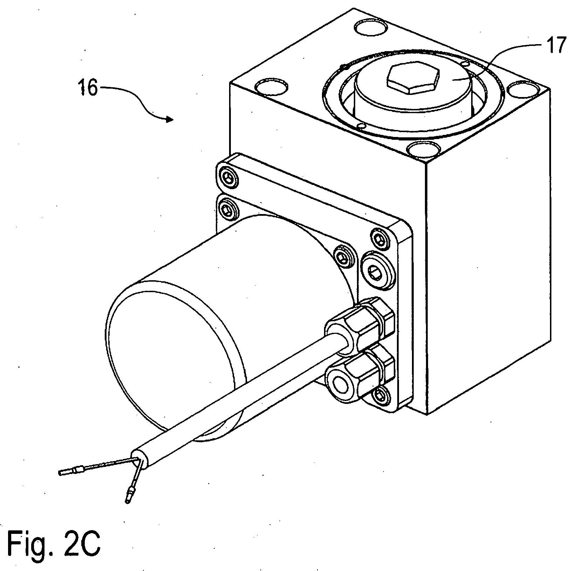

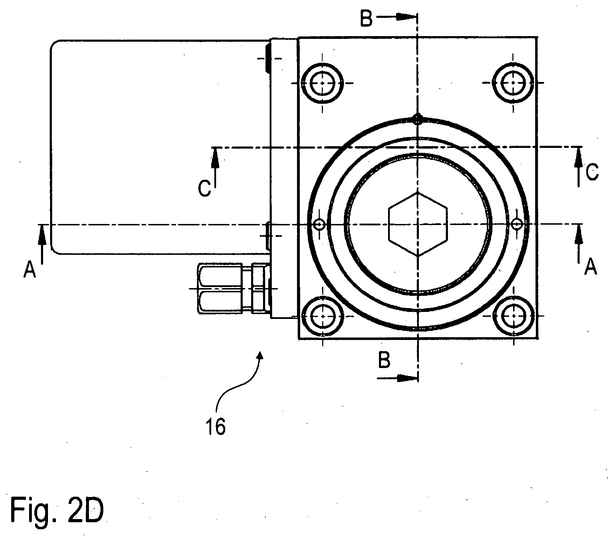

Im Folgenden wird nun ein erfindungsgemäßes Abstützelement 16 beschrieben, das in den Figuren 2A-2D dargestellt ist.

Das Abstützelement 16 dient zur Stabilisierung von Werkstücken durch Anlage eines Bolzens an variablen Oberflächen.

Dabei soll das Abstützelement 16 das Werkstück möglichst nicht verformen, aber bei der Bearbeitung mit hoher Kraft abstützen.

Ein elektromechanisch angetriebene Kolben 17 fährt das Werkstück linear mit geringer Kraft an, und wird dann angehalten. Ein selbsthemmender Spindelantrieb ermöglicht eine hohe Abstützkraft mit geringer Nachgiebigkeit, die auch nach einer Trennung vom Stromnetz aufrechterhalten wird. Der Antrieb des elektromechanischen Abstützelements 16 erfolgt über einen Elektromotor 18 mit einer Schneckenwelle 19, dem ein Schneckenrad 20 nachgeschaltet ist. Die mit dem Schneckenrad 20 verbundene Spindel 21 überträgt das Drehmoment auf die Spindelmutter an der Innenseite des Kolbens 17. Diese führt dann eine lineare Bewegung aus. Der mit der Spindelmutter verbundene Kolben 17 wird somit aus- bzw. einfahren. Die eingefahrene Position des Kolbens 17 wird durch einen Näherungsschalter bestimmt. Vor dem eigentlichen Abstützvorgang fährt der Kolben 17 im manuellen Betrieb bis auf kurzen Abstand an das Werkstück heran. Diese Position wird als Vorabschaltpunkt in der Steuerung gespeichert. Im Arbeitsgang wird der Kolben 17 mit hoher Geschwindigkeit bis auf den Vorabschaltpunkt ausgefahren. Danach fährt der Kolben 17 mit reduzierter Geschwindigkeit an das Werkstück heran. Die Steuerung merkt dabei den Stromanstieg und bremst den Elektromotor 18 beim Erreichen des voreingestellten Stromaufnahmewertes kontrolliert ab. Diese Funktion kann durch eine mechanische Kupplung, welche sich zwischen der Spindel 21 und dem Schneckenrad 19 befindet, unterstützt oder ersetzt werden. Die Kupplung ist so ausgelegt, das die lineare Bewegung des Kolbens 17 beim Erreichen einer geringen Vorspannkraft unterbrochen wird. Dabei wird das Ansprechen der Kupplung von der Steuerung erkannt und der Elektromotor 18 wird abgeschaltet. Nachdem das Werkstück bearbeitet ist, wird der Kolben 17 bis auf den Nährungsschalter zurückgefahren. Im belasteten Zustand übernimmt der stabile selbsthemmende Spindeltrieb die hohe Abstützkraft und überträgt diese über eine Laufscheibe auf das Gehäuse. Dieser Aufbau führt zu geringer Nachgiebigkeit des Abstützelementes.

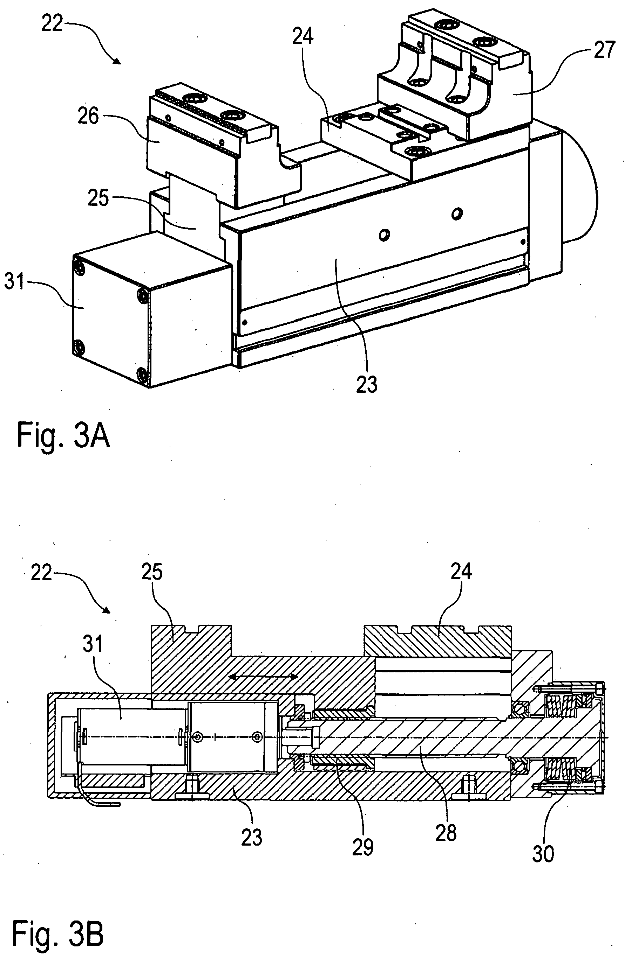

Im Folgenden wird nun ein erfindungsgemäßer Maschinenschraubstock 22 (Spannstock) beschrieben, der in den Figuren 3A und 3B dargestellt ist.

Der Maschinenschraubstock 22 besteht aus einem U-förmigen Grundkörper 23, an dem eine feststehende Spannbackenaufnahme 24 befestigt ist. Der Grundkörper 23 dient als Führung für einen beweglichen Schlitten 25. Auf diese Grundkonstruktion werden Wechselbacken 26, 27 montiert, mit deren Hilfe prismatische Teile gespannt werden können, vorzugsweise zur spanenden Bearbeitung auf Werkzeugmaschinen.

Die Zustellung des Schlittens 25 und die Erzeugung der Spannkraft erfolgt über einen Mutter-Spindelantrieb mit einer Spindel 28 und einer Spindelmutter 29. Die Spindelmutter 29 ist in dem Schlitten 25 fest fixiert. Der Antrieb der Spindel 28 erfolgt über einen Elektromotor 31 mit einem Getriebe. Der Elektromotor 31 ist platzsparend unterhalb des Schlittens 25 angeordnet. Der Elektromotor 31 ist als Elektromotor 31 mit integriertem Drehgeber ausgeführt. Die Entspannstellung des Spindeltriebs wird über einen Endlagenschalter überwacht. Dieser Endlagenschalter dient auch als Referenzpunkt für den Verfahrweg. Das Spannen von Werkstücken erfolgt innerhalb des Verstellweges. Beim Anstellen an das Werkstück erfolgt der Spannkraftaufbau über die Tellerfedern 30. Hierzu ist die Spindel 28 axial verschiebbar gelagert. Dies verhindert ein abruptes Abstoppen des Elektromotor 31 bei Anlage und ermöglicht einen gesteuerten Spannkraftaufbau. Des Weiteren werden die Tellerfedern 30 für die Erhaltung der Spannkraft eingesetzt, die auch nach einer Trennung vom Stromnetz erhalten bleibt.

Der Spannkraftaufbau und die Höhe der erreichten Spannkraft werden über den Federweg, abgeleitet aus den Umdrehungen des Elektromotor 31, ermittelt.

Weiterhin kann der Schlitten 25 im gelösten Zustand über den Drehgeber in seiner Lage überwacht werden. Dadurch können die Bewegungen zum Öffnen des Schlittens 25 extern gesteuert werden und es kann auch extern überwacht werden, ob das Werkstück sich in einer definierten Sollzone befindet und somit die korrekte Größe in Spannrichtung hat.

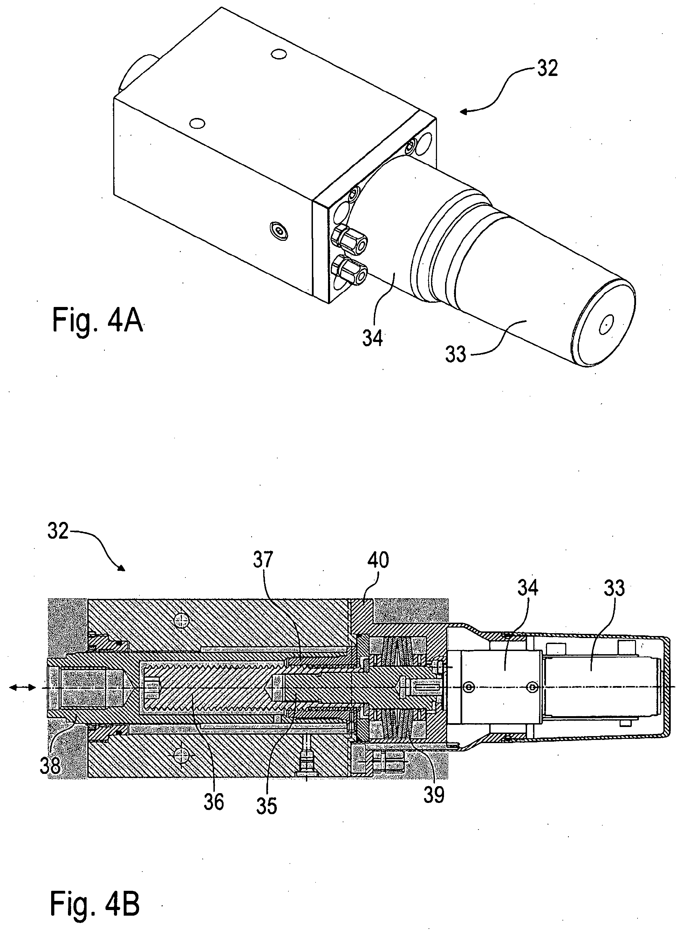

Im Folgenden wird nun ein erfindungsgemäßer elektromechanischer Blockzylinder 32 beschrieben, der in den Figuren 4A und 4B dargestellt ist.

Der Antrieb des Blockzylinders 32 erfolgt über einen Elektromotor 33, dem ein Getriebe 34 nachgeschaltet ist. Die an dem Getriebe 34 abgehende Welle überträgt das Drehmoment über eine Wellen-Nabenverbindung auf eine Verbindungswelle 35, welche mit der Spindel 36 verbunden ist. Die Spindel 36 greift mit ihrem Außengewinde in ein entsprechendes Innengewinde einer Spindelmutter 37 ein, wobei die Spindelmutter 37 fest mit einem ausfahrbaren Kolben 38 verbunden ist. Über diesen Spindelmuttertrieb wird die Drehbewegung der Welle des Elektromotors 33 in eine lineare Bewegung des Kolbens 38 umgewandelt, so dass der Kolben 38 ausgefahren bzw. eingefahren werden kann.

Beim Spannvorgang des elektromechanischen Blockzylinders 32 wird ein Werkstück auf einer Vorrichtung gespannt. Durch das Auffahren auf das Werkstück werden die Spindel 36 und damit auch die daran fest verschraubte Verbindungswelle 35 auf der Getriebeausgangswelle des Getriebes 34 nach rechts (bezogen auf Figur 4B) bewegt. Beim weiteren Aufbau der Spannkraft werden Tellerfedern 39 vorgespannt. Ab dem bestimmten Stromaufnahmepegel merkt sich die Steuerung die Position der Spindel 36 und führt ab da eine vorbestimmte Anzahl der Motorumdrehungen mir reduzierter Drehgeschwindigkeit aus, bis die gewünschte Spannkraft definiert aufgebaut ist.

Somit übernehmen die Tellerfedern 39 die Funktion eines Kraftsensors. Des Weiteren werden die Tellerfedern 39 für die Erhaltung der Spannkraft eingesetzt, die auch nach einer Trennung vom Stromnetz bleibt. Eine weitere Aufgabe der Tellerfedern 39 ist das Auffangen des bei dem Elektromotor 33 auftretenden Trägheitsmomentes. Dabei werden die Bauteile vor zu großen Belastungen geschützt, wenn der Kolben 38 auf das Werkstück auffährt. Die selbsthemmende Kombination aus der Spindel 36 und der Spindelmutter 37 verhindert das Rückdrehen des Elektromotors 33 und trägt somit zum Aufrechterhalten der Spannkraft bei. Die vibrationsbedingte und theoretisch mögliche Rückdrehung der Spindel 36 wird durch die Steuerung im Bedarfsfall nachkorrigiert. Die Tellerfedern 39, ein Nadellager und eine Stützscheibe ermöglichen sowohl einen Spannvorgang in Druckrichtung wie auch in Zugrichtung. Dabei werden die Reaktionskräfte vollständig von dem Gehäuse 40 und nicht von dem Elektromotor 33 aufgenommen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Ansprüchen.

**Bezugszeichenliste**

| | | | |
|---|---|---|---|
| 1 | Schwenkspanner | 33 | Elektromotor |
| 2 | Kolben | 34 | Getriebe |
| 3 | Gehäuse | 35 | Verbindungswelle |
| 4 | Führungsbuchse | 36 | Spindel |
| 5 | Filzring | 37 | Spindelmutter |
| 6 | Spindelmutter | 38 | Kolben |
| 7 | Spindel | 39 | Tellerfedern |
| 8 | Kulissenstein | 40 | Gehäuse |
| 9 | Tellerfedern | | |
| 10 | Elektromotor | | |
| 11 | Scheibe | | |
| 12 | Motorwellenbuchse | | |
| 13 | Axialrillenkugellager | | |
| 14 | Getriebe | | |
| 15 | Tellerfedern | | |
| 16 | Abstützelement | | |
| 17 | Kolben | | |
| 18 | Elektromotor | | |
| 19 | Schneckenwelle | | |
| 20 | Schneckenrad | | |
| 21 | Spindel | | |
| 22 | Maschinenschraubstock | | |
| 23 | Grundkörper | | |
| 24 | Spannbackenaufnahme | | |
| 25 | Schlitten | | |
| 26 | Wechselbacke | | |
| 27 | Wechselbacke | | |
| 28 | Spindel | | |
| 29 | Spindelmutter | | |
| 30 | Tellerfedern | | |
| 31 | Elektromotor | | |
| 32 | Blockzylinder | | |

## Patentansprüche

1. Spannvorrichtung (1; 16; 22; 32) mit
a) einem beweglichen Spannelement (2; 17; 25, 26; 38) zum Spannen eines Werkstücks mit einer bestimmten Spannkraft,
b) einem Elektromotor (10; 18; 31; 33) zum mechanischen Antrieb des Spannelements (2; 17; 25, 26; 38), und
c) einem ersten Federelement (9; 30; 39), das bei einem Spannvorgang belastet und bei einem Entspannvorgang entlastet wird, und
d) einer Steuereinheit, die den Elektromotor (10; 18; 31; 33) ansteuert, wobei die Steuereinheit folgende Schritte ausführt:
d1) Messen einer elektrischen Betriebsgröße des Elektromotors (10; 18; 31; 33) als Maß für die Spannkraft,
d2) Überprüfen der gemessenen elektrischen Betriebsgröße auf eine Änderung, die dadurch verursacht wird, dass das bewegliche Spannelement auf das zu spannende Werkstück aufläuft, und
d3) Abschalten des Elektromotors (10; 18; 31; 33) bei Erreichen einer bestimmten Spannkraft,
**dadurch gekennzeichnet, dass** die Steuereinheit folgende Schritte ausführt:
d4) Zählen der Umdrehungen des Elektromotors (10; 18; 31; 33) ab dem Auflaufen auf das Werkstück, und
d5) Berechnen der Spannkraft aus der Anzahl der Umdrehungen des Elektromotors (10; 18; 31; 33) und einer vorgegebenen Federkennlinie.

2. Spannvorrichtung (1; 16; 22; 32) nach Anspruch 1,
**dadurch gekennzeichnet,**
a) **dass** das Spannelement (2; 17; 25, 26; 38) bei einem Spannvorgang in eine bestimmten Spannrichtung bewegt wird,
b) **dass** das erste Federelement (9; 30; 39) das Spannelement (2; 25, 26; 38) mit einer bestimmten Federkraft entweder entgegen der Spannrichtung oder in der Spannrichtung drückt,
c) **dass** die Federkraft des ersten Spannelement (2; 25, 26; 38) im Wesentlichen gleich der Spannkraft ist, die das Spannelement (2; 25, 26; 38) auf das Werkstück ausübt.

3. Spannvorrichtung (1) nach Anspruch 1 oder 2,
**gekennzeichnet durch**
ein zweites Federelement (15), das bei einem Entspannvorgang belastet und bei einem Spannvorgang entlastet wird,
wobei das zweite Federelement (15) bei einem Entspannvorgang vorzugsweise eine reibschlüssige Verbindung zwischen dem Elektromotor (10) und dem Spannelement (2) bildet.

4. Spannvorrichtung (1) nach Anspruch 3,
**dadurch gekennzeichnet,**
a) **dass** die Spannvorrichtung ein Schwenkspanner (1) ist,
b) **dass** das Spannelement (2) zum Spannen oder Entspannen des Werkstücks entlang einer Spannrichtung linear verschiebbar ist,
c) **dass** das Spannelement (2) im entspannten Zustand schwenkbar ist,
d) **dass** die reibschlüssige Verbindung zwischen dem Elektromotor (10) und dem Spannelement (2) eine Schwenkbewegung des Spannelements (2) bewirkt.

5. Spannvorrichtung (1) nach einem der vorhergehenden Ansprüche, **gekennzeichnet durch**
a) einen axial verschiebbaren Kolben (2), der das Spannelement trägt,
b) eine mit dem Kolben (2) verbundene Spindelmutter (6),
c) eine von dem Elektromotor (10) drehbar angetriebene Spindel (7), die in die Spindelmutter (6) eingreift und eine Drehbewegung des Elektromotors (10) in eine Linearbewegung des Kolbens (2) und damit auch des Spannelements umwandelt,
d) wobei die Verbindung zwischen der Spindelmutter (6) und der Spindel (7) vorzugsweise selbsthemmend ist,
e) wobei vorzugsweise eine Kulissensteuerung vorgesehen ist, die zu Beginn eines Spannvorgangs und am Ende eines Entspannvorgangs nur eine Schwenkbewegung des Spannelements (2) erlaubt und ansonst nur eine Linearbewegung des Spannelements (2) erlaubt.

6. Spannvorrichtung nach einem der vorhergehenden Ansprüche, **dadurch gekennzeichnet,**
a) **dass** die Steuereinheit einen Spannvorgang in Abhängigkeit von der gemessenen elektrischen Betriebsgröße des Elektromotors (10; 18; 31; 33) beendet, wobei der Spannvorgang beendet wird, wenn die gemessene elektrische Betriebsgröße der gewünschten Spannkraft entspricht, und/oder
b) **dass** die Steuereinheit einen Entspannvorgang in Abhängigkeit von der gemessenen elektrischen Betriebsgröße des Elektromotors (10; 18; 31; 33) beendet, wobei der Entspannvorgang beendet wird, wenn die gemessene elektrische Betriebsgröße einer gewünschten Reibkraft der reibschlüssigen Verbindung zwischen dem Elektromotor und dem Spannelement entspricht.

7. Spannvorrichtung nach einem der vorhergehenden Ansprüche, **dadurch gekennzeichnet, dass** die Spannvorrichtung
a) nur ziehend oder
b) nur drückend oder
c) ziehend und drückend arbeitet.

8. Steuerverfahren für eine Spannvorrichtung (1; 16; 22; 32) mit einem beweglichen Spannelement (2; 17; 25, 26; 38) zum Spannen eines Werkstücks, einem Elektromotor (10; 18; 31; 33) zum mechanischen Antrieb des Spannelements (2; 17; 25, 26; 38), einem ersten Federelement (9; 30; 39), das bei einem Spannvorgang belastet und bei einem Entspannvorgang entlastet wird, sowie mit einer Steuereinheit zum Ansteuern des Elektromotors (10; 18; 31; 33),
mit folgenden Schritten:
a) Erfassen einer elektrischen Betriebsgröße des Elektromotors (10; 18; 31; 33) als Maß für die Spannkraft,
b) Überprüfen der gemessenen elektrischen Betriebsgröße auf eine Änderung, die dadurch verursacht wird, dass das bewegliche Spannelement auf das zu spannende Werkstück aufläuft,
c) Abschalten des Elektromotors (10; 18; 31; 33) bei Erreichen einer bestimmten Spannkraft,
**gekennzeichnet durch** folgende Schritte:
d) Zählen der Umdrehungen des Elektromotors (10; 18; 31; 33) ab dem Auflaufen auf das Werkstück,
e) Berechnen der Spannkraft aus der Anzahl der Umdrehungen des Elektromotors (10; 18; 31; 33) und einer vorgegebenen Federkennlinie.

9. Steuerverfahren nach Anspruch 8, **dadurch gekennzeichnet, dass** die Spannvorrichtung (1) ein Schwenkspanner (1) ist und bei einem Spannvorgang folgende Schritte ausgeführt werden:
a) Starten des Elektromotors (10) mit einer geringen Drehzahl zum Schwenken des Spannelements (2) in eine Spannposition unter Ausnutzung einer reibschlüssigen Verbindung zwischen dem Elektromotor (10) und dem Spannelement (2), und/oder
b) Betrieb des Elektromotors (10) mit einer geringen Drehzahl zum Lösen einer reibschlüssigen Verbindung zwischen dem Elektromotor (10) und dem Spannelement (2), und/oder
c) Messen der elektrischen Betriebsgröße des Elektromotors (10) während des Spannvorgangs, und/oder
d) Überprüfen, ob die gemessene elektrische Betriebsgröße anzeigt, dass die reibschlüssige Verbindung zwischen dem Elektromotor (10) und dem Spannelement (2) gelöst ist, und/oder
e) Anheben der Drehzahl des Elektromotors (10), wenn die reibschlüssige Verbindung zwischen dem Elektromotor (10) und dem Spannelement (2) gelöst ist, und/oder
f) Messen der elektrischen Betriebsgröße des Elektromotors (10) während des Spannvorgangs, und/oder
g) Überprüfen, ob die gemessene elektrische Betriebsgröße anzeigt, däss das Spannelement (2) auf das Werkstück aufgelaufen ist, und/oder
h) Verringern der Drehzahl des Elektromotors (10), wenn das Spannelement (2) auf das Werkstück aufgelaufen ist,
i) Spannen des ersten Federelements (9), und/oder
j) Messen der elektrischen Betriebsgröße des Elektromotors (10) während des Spannvorgangs, und/oder
k) Überprüfen, ob die gemessene elektrische Betriebsgröße anzeigt, dass die gewünschte Spannkraft erreicht ist,
l) Abschalten des Elektromotors (10), wenn die gewünschte Spannkraft erreicht ist.

10. Steuerverfahren nach Anspruch 8 oder 9, **dadurch gekennzeichnet, dass** die Spannvorrichtung (1) ein Schwenkspanner (1) ist und bei einem Entspannvorgang folgende Schritte ausgeführt werden:
a) Starten des Elektromotors (10) mit einer geringen Drehzahl zum Abbauen der Spannkraft, und/oder
b) Messen der elektrischen Betriebsgröße des Elektromotors (10) während des Entspannvorgangs, und/oder
c) Überprüfen, ob die gemessene elektrische Betriebsgröße anzeigt, dass die Spannkraft abgebaut ist, und/oder
d) Anheben der Drehzahl des Elektromotors (10), wenn die Spannkraft abgebaut ist, und/oder
e) Messen der elektrischen Betriebsgröße des Elektromotors (10) während des Entspannvorgangs, und/oder
f) Erhöhen des Reibschlusses zwischen dem Elektromotor (10) und dem Spannelement (2) durch Spannen des zweiten Federelements (15), und/oder
g) Schwenken des Spannelements (2) in die Entspannstellung mit geringer Drehzahl, und/oder
h) weitere Erhöhung des Reibschlusses zwischen dem Elektromotor (10) und dem Spannelement (2), und/oder
i) Überprüfen, ob die gemessene elektrische Betriebsgröße anzeigt, dass die reibschlüssige Verbindung zwischen dem Elektromotor (10) und dem Spannelement (2) eine gewünschte Reibkraft aufweist, und/oder
j) Abschalten des Elektromotors (10), wenn die gewünschte Reibkraft erreicht ist.

11. Steuerverfahren nach Anspruch 8, **dadurch gekennzeichnet, dass** die Spannvorrichtung (32) ein Blockzylinder (32) ist und bei einem Spannvorgang folgende Schritte ausgeführt werden:
a) Starten des Elektromotors (33) mit einer geringen Drehzahl zum Lösen einer reibschlüssigen Verbindung zwischen dem Elektromotor (33) und dem Spannelement (38), und/oder
b) Messen der elektrischen Betriebsgröße des Elektromotors (33) während des Spannvorgangs, und/oder
c) Überprüfen, ob die gemessene elektrische Betriebsgröße anzeigt, dass die reibschlüssige Verbindung zwischen dem Elektromotor (33) und dem Spannelement (38) gelöst ist, und/oder
d) Anheben der Drehzahl des Elektromotors (33), wenn die reibschlüssige Verbindung zwischen dem Elektromotor (33) und dem Spannelement (38) gelöst ist, und/oder
e) Messen der elektrischen Betriebsgröße des Elektromotors (33) während des Spannvorgangs, und/oder
f) Überprüfen, ob die gemessene elektrische Betriebsgröße anzeigt, dass das Spannelement (38) auf das Werkstück aufgelaufen ist, und/oder
g) Verringern der Drehzahl des Elektromotors (33), wenn das Spannelement (38) auf das Werkstück aufgelaufen ist, und/oder
h) Spannen des Federelements (39), und/oder
i) Messen der elektrischen Betriebsgröße des Elektromotors (33) während des Spannvorgangs, und/oder
j) Überprüfen, ob die gemessene elektrische Betriebsgröße anzeigt, dass die gewünschte Spannkraft erreicht ist,
k) Abschalten des Elektromotors (33), wenn die gewünschte Spannkraft erreicht ist.

12. Steuerverfahren nach Anspruch 8 oder 11, **dadurch gekennzeichnet, dass** die Spannvorrichtung (32) ein Blockzylinder (32) ist und bei einem Entspannvorgang folgende Schritte ausgeführt werden:
a) Starten des Elektromotors (33) mit einer geringen Drehzahl zum Abbauen der Spannkraft, und/oder
b) Messen der elektrischen Betriebsgröße des Elektromotors (33) während des Entspannvorgangs, und/oder
c) Überprüfen, ob die gemessene elektrische Betriebsgröße anzeigt, dass die Spannkraft abgebaut ist, und/oder
d) Anheben der Drehzahl des Elektromotors (33), wenn die Spannkraft abgebaut ist, und/oder
e) Messen der elektrischen Betriebsgröße des Elektromotors (33) während des Entspannvorgangs, und/oder
f) Spannen des Federelements (39), und/oder
g) Messen der elektrischen Betriebsgröße des Elektromotors (33) während des Entspannvorgangs, und/oder
h) Überprüfen, ob die gemessene elektrische Betriebsgröße anzeigt, dass die gewünschte Entspannkraft erreicht ist, und/oder
i) Abschalten des Elektromotors (33), wenn die gewünschte Entspannkraft erreicht ist.

13. Steuerverfahren nach Anspruch 8, **dadurch gekennzeichnet, dass** die Spannvorrichtung (22) ein Maschinenschraubstock (22) ist und bei einem Spannvorgang folgende Schritte ausgeführt werden:
a) Starten des Elektromotors (31) mit hoher Drehzahl, und/oder
b) Messen der elektrischen Betriebsgröße des Elektromotors (31) während des Spannvorgangs, und/oder
c) Überprüfen, ob die gemessene elektrische Betriebsgröße anzeigt, dass das Spannelement (25, 26) auf das Werkstück aufgelaufen ist, und/oder
d) Verringern der Drehzahl des Elektromotors (31), wenn das Spannelement (25, 26) auf das Werkstück aufgelaufen ist, und/oder
e) Spannen des Federelements (30), und/oder
f) Messen der elektrischen Betriebsgröße des Elektromotors (31) während des Spannvorgangs, und/oder
g) Überprüfen, ob die gemessene elektrische Betriebsgröße anzeigt, dass die gewünschte Spannkraft erreicht ist, und/oder
h) Abschalten des Elektromotors (31), wenn die gewünschte Spannkraft erreicht ist.

14. Steuerverfahren nach Anspruch 8 oder 13, **dadurch gekennzeichnet, dass** die Spannvorrichtung (22) ein Maschinenschraubstock (22) ist und bei einem Entspannvorgang folgende Schritte ausgeführt werden:
a) Starten des Elektromotors (31) mit einer geringen Drehzahl zum Abbauen der Spannkraft, und/oder
b) Messen der elektrischen Betriebsgröße des Elektromotors (31) während des Entspannvorgangs, und/oder
c) Überprüfen, ob die gemessene elektrische Betriebsgröße anzeigt, dass die Spannkraft abgebaut ist, und/oder
d) Anheben der Drehzahl des Elektromotors (31), wenn die Spannkraft abgebaut ist, und/oder
e) Messen der elektrischen Betriebsgröße des Elektromotors (31) während des Entspannvorgangs, und/oder
f) Fahren in die Entspannposition, definiert über den Weg bzw. durch einen Endlagenschalter, Abschalten des Elektromotors (31).

15. Steuerverfahren nach Anspruch 8, **dadurch gekennzeichnet, dass** die Spannvorrichtung (16) ein Abstützelement (16) ist und bei einem Spannvorgang folgende Schritte ausgeführt werden:
a) Starten des Elektromotors' (18) mit hoher Drehzahl, und/oder
b) Messen der elektrischen Betriebsgröße des Elektromotors (18) während des Anlegevorgangs, und/oder
c) bei Erreichen der Vorabschaltpostion Verringern der Drehzahl des Elektromotors (18), und/oder
d) Messen der elektrischen Betriebsgröße des Elektromotors (18) während des Anlegevorgangs, und/oder
e) Überprüfen, ob die gemessene elektrische Betriebsgröße anzeigt, dass das Spannelement (17) auf das Werkstück aufgelaufen ist, wenn ja, sofortiges Abschalten des Elektromotors (18), und/oder
f) Überprüfen, ob die Reibkupplung angesprochen hat, wenn ja, sofortiges Abschalten des Elektromotors (18).

## Claims

1. A clamping device (1; 16; 22; 32) with
a) a movable clamping element (2; 17; 25, 26; 38) for clamping a workpiece with a certain clamping force,
b) an electric motor (10; 18; 31; 33) for the mechanical drive of the clamping element (2; 17; 25, 26; 38), and
c) a first spring element (9; 30; 39) which is loaded during a clamping procedure and relaxed during an unclamping procedure
d) a control unit which controls the electric motor (10; 18; 31; 33), wherein the control unit executes the following steps:
d1) measuring an electrical operating variable of the electric motor (10; 18; 31; 33) as a measure for the clamping force,
d2) checking the measured electrical operating variable for a change which is caused by the movable clamping element running onto the workpiece to be clamped, and
d3) switching off the electric motor (10; 18; 31; 33) when a certain clamping force has been reached,
**characterized in that** the control unit carries out following steps:
d4) counting the revolutions of the electric motor (10; 18; 31; 33) starting from the running onto the workpiece, and
d5) calculating the clamping force from the number of revolutions of the electric motor (10; 18; 31; 33) and a predetermined spring characteristic.

2. The clamping device (1; 16; 22; 32) according to claim 1, **characterized in that**
a) the clamping element (2; 17; 25, 26; 38) is moved in a certain clamping direction during a clamping procedure,
b) the first spring element (9; 30; 39) presses the clamping element (2; 25, 26; 38) either counter to the clamping direction or in the clamping direction with a certain spring force,
c) the spring force of the first clamping element (2; 25, 26; 38) is essentially equal to the clamping force which the clamping element (2; 25, 26; 38) exerts on the workpiece.

3. The clamping device (1) according to claim 1 or 2, **characterized by** a second spring element (15) which is loaded during an unclamping procedure and relaxed during a clamping procedure, wherein the second spring element (15) preferably forms a frictionally engaged connection between the electric motor (10) and the clamping element (2) in the case of an unclamping procedure.

4. The clamping device (1) according to claim 3, **characterized in that**
a) the clamping device is a swing clamp (1),
b) the swing clamp (2) can be displaced linearly along a clamping direction for clamping or unclamping the workpiece,
c) the clamping element (2) can be pivoted in the unclamped state,
d) the frictionally engaged connection between the electric motor (10) and the clamping element (2) effects a pivoting movement of the clamping element (2).

5. The clamping device (1) according to any one of the preceding claims, **characterized by**
a) an axially slideable piston (2), which carries the clamping element,
b) a spindle nut (6) connected to the piston (2),
c) a spindle (7), which is rotatably driven by the electric motor (10) and engages into the spindle nut (6) and converts a rotational movement of the electric motor (10) into a linear movement of the piston (2) and thus also of the clamping element,
d) wherein the connection between the spindle nut (6) and the spindle (7) is preferably self-locking,
e) wherein a sliding control is preferably provided, which only allows one pivoting movement of the clamping element (2) at the start of a clamping procedure and at the end of a clamping procedure and otherwise only allows a linear movement of the clamping element (2).

6. The clamping device according to any one of the preceding claims, **characterized in that**
a) the control unit ends a clamping procedure depending on the measured electrical operating variable of the electric motor (10; 18; 31; 33), wherein the clamping procedure is ended when the measured electrical operating variable corresponds to the desired clamping force, and/or
b) the control unit ends an unclamping procedure depending on the measured electrical operating variable of the electric motor (10; 18; 31; 33), wherein the unclamping procedure is ended when the measured electrical operating variable corresponds to a desired friction force of the frictionally engaged connection between the electric motor and the clamping element.

7. The clamping device according to any one of the preceding claims, **characterized in that** the clamping device
a) only operates in a pulling manner or
b) only operates in a pushing manner or
c) operates in a pulling and pushing manner.

8. A control method for a clamping device (1; 16; 22; 32) with a movable clamping element (2; 17; 25, 26; 38) for clamping a workpiece, an electric motor (10; 18; 31; 33) for the mechanical drive of the clamping element (2; 17; 25, 26; 38), a first spring element (9; 30; 39), which is loaded during a clamping procedure and relaxed during an unclamping procedure, as well as with a control unit for controlling the electric motor (10; 18; 31; 33),
with the following steps:
a) detecting an electrical operating variable of the electric motor (10; 18; 31; 33) as a measure for the clamping force,
b) checking the measured electrical operating variable for a change which is caused by the movable clamping element running onto the workpiece to be clamped,
c) switching off the electric motor (10; 18; 31; 33) when a certain clamping force has been reached,
**characterized by** the following steps:
d) counting the revolutions of the electric motor (10; 18; 31; 33) starting from the running onto the workpiece,
e) calculating the the clamping force from the number of revolutions of the electric motor (10; 18; 31; 33) and a predetermined spring characteristic.

9. The control method according to claim 8, **characterized in that** the clamping device (1) is a swing clamp (1) and the following steps are executed during a clamping procedure:
a) starting the electric motor (10) with a low rotational speed for pivoting the clamping element (2) into a clamping position, utilizing a frictionally engaged connection between the electric motor (10) and the clamping element (2), and/or
b) operating the electric motor (10) with a low rotational speed for releasing a frictionally engaged connection between the electric motor (10) and the clamping element (2), and/or
c) measuring the electrical operating variable of the electric motor (10) during the clamping procedure, and/or
d) checking whether the measured electrical operating variable indicates that the frictionally engaged connection between the electric motor (10) and the clamping element (2) is released, and/or
e) increasing the rotational speed of the electric motor (10) when the frictionally engaged connection between the electric motor (10) and the clamping element (2) is released, and/or
f) measuring the electrical operating variable of the electric motor (10) during the clamping procedure, and/or
g) checking whether the measured electrical operating variable indicates that the clamping element (2) has run onto the workpiece, and/or
h) reducing the rotational speed of the electric motor (10) if the clamping element (2) has run onto the workpiece,
i) straining the first spring element (9), and/or
j) measuring the electrical operating variable of the electric motor (10) during the clamping procedure, and/or
k) checking whether the measured electrical operating variable indicates that the desired clamping force has been reached,
l) switching off the electric motor (10) if the desired clamping force has been reached.

10. The control method according to claim 8 or 9, **characterized in that** the clamping device (1) is a swing clamp (1) and the following steps are executed during an unclamping procedure:
a) starting the electric motor (10) with a low rotational speed for reducing the clamping force, and/or
b) measuring the electrical operating variable of the electric motor (10) during the unclamping procedure, and/or
c) checking whether the measured electrical operating variable indicates that the clamping force is decreased, and/or
d) increasing the rotational speed of the electric motor (10) if the clamping force is decreased, and/or
e) measuring the electrical operating variable of the electric motor (10) during the unclamping procedure, and/or
f) increasing the frictional engagement between the electric motor (10) and the clamping element (2) by straining the second spring element (15), and/or
g) pivoting the clamping element (2) into the unclamping position with a low rotational speed, and/or
h) further increasing the frictional engagement between the electric motor (10) and the clamping element (2), and/or
i) checking whether the measured electrical operating variable indicates that the frictionally engaged connection between the electric motor (10) and the clamping element (2) has a desired friction force, and/or
j) switching off the electric motor (10) if the desired friction force has been reached.

11. The control method according to claim 8, **characterized in that** the clamping device (32) is a block cylinder (32) and the following steps are executed during a clamping procedure:
a) starting the electric motor (33) with a low rotational speed for releasing a frictionally engaged connection between the electric motor (33) and the clamping element (38), and/or
b) measuring the electrical operating variable of the electric motor (33) during the clamping procedure, and/or
c) checking whether the measured electrical operating variable indicates that the frictionally engaged connection between the electric motor (33) and the clamping element (38) is released, and/or
d) increasing the rotational speed of the electric motor (33) when the frictionally engaged connection between the electric motor (33) and the clamping element (38) is released, and/or
e) measuring the electrical operating variable of the electric motor (33) during the clamping procedure, and/or
f) checking whether the measured electrical operating variable indicates that the clamping element (38) has run onto the workpiece, and/or
g) reducing the the rotational speed of the electric motor (33) if the clamping element (38) has run onto the workpiece, and/or
h) straining the spring element (39), and/or
i) measuring the electrical operating variable of the electric motor (33) during the clamping procedure, and/or
j) checking whether the measured electrical operating variable indicates that the desired clamping force has been reached,
k) switching off the electric motor (33) if the desired clamping force has been reached.

12. The control method according to claim 8 or 11, **characterized in that** the clamping device (32) is a block cylinder (32) and the following steps are executed during an unclamping procedure:
a) starting the electric motor (33) with a low rotational speed for reducing the clamping force, and/or
b) measuring the electrical operating variable of the electric motor (33) during the unclamping procedure, and/or
c) checking whether the measured electrical operating variable indicates that the clamping force is decreased, and/or
d) increasing the rotational speed of the electric motor (33) if the clamping force is decreased, and/or
e) measuring the electrical operating variable of the electric motor (33) during the unclamping procedure, and/or
f) straining the spring element (39), and/or
g) measuring the electrical operating variable of the electric motor (33) during the unclamping procedure, and/or
h) checking whether the measured electrical operating variable indicates that the desired unclamping force has been reached, and/or
i) switching off the electric motor (33) if the desired unclamping force has been reached.

13. The control method according to claim 8, **characterized in that** the clamping device (22) is a machine vice (22) and the following steps are executed during a clamping procedure:
a) starting the electric motor (31) with high rotational speed, and/or
b) measuring the electrical operating variable of the electric motor (31) during the clamping procedure, and/or
c) checking whether the measured electrical operating variable indicates that the clamping element (25, 26) has run onto the workpiece, and/or
d) reducing the the rotational speed of the electric motor (31) if the clamping element (25, 26) has run onto the workpiece, and/or
e) straining the spring element (30), and/or
f) measuring the electrical operating variable of the electric motor (31) during the clamping procedure, and/or
g) checking whether the measured electrical operating variable indicates that the desired clamping force has been reached, and/or
h) switching off the electric motor (31) if the desired clamping force has been reached.

14. The control method according to claim 8 or 13, **characterized in that** the clamping device (22) is a machine vice (22) and the following steps are executed during an unclamping procedure:
a) starting the electric motor (31) with a low rotational speed for reducing the clamping force, and/or
b) measuring the electrical operating variable of the electric motor (31) during the unclamping procedure, and/or
c) checking whether the measured electrical operating variable indicates that the clamping force is decreased, and/or
d) increasing the rotational speed of the electric motor (31) if the clamping force is decreased, and/or
e) measuring the electrical operating variable of the electric motor (31) during the unclamping procedure, and/or
f) traveling into the unclamping position, defined via the path resp. by means of a limit switch, switching off the electric motor (31).

15. The control method according to claim 8, **characterized in that** the clamping device (16) is a support element (16) and the following steps are executed during a clamping procedure:
a) starting the electric motor (18) with high rotational speed, and/or
b) measuring the electrical operating variable of the electric motor (18) during the setup procedure, and/or
c) reducing the rotational speed of the electric motor (18) when the advance switching position is reached, and/or
d) measuring the electrical operating variable of the electric motor (18) during the setup procedure, and/or
e) checking whether the measured electrical operating variable indicates that the clamping element (17) has run onto the workpiece, if so, immediate switching off of the electric motor (18), and/or
f) checking whether the friction coupling has responded, if so, immediate switching off of the electric motor (18).

## Revendications

1. Dispositif de serrage (1 ; 16 ; 22 ; 32) avec
a) un élément de serrage (2 ; 17 ; 25, 26 ; 38) mobile pour le serrage d'une pièce avec une force de serrage déterminée,
b) un moteur électrique (10 ; 18 ; 31 ; 33) pour l'entraînement mécanique de l'élément de serrage (2 ; 17 ; 25, 26 ; 38) et
c) un premier élément de ressort (9 ; 30 ; 39) qui est chargé pour un processus de serrage et est déchargé pour un processus de desserrage, et
d) une unité de commande qui commande le moteur électrique (10 ; 18 ; 31 ; 33), l'unité de commande réalisant les étapes suivantes :
d1) la mesure d'une grandeur de fonctionnement électrique du moteur électrique (10 ; 18 ; 31 ; 33) comme mesure pour la force de serrage,
d2) la vérification de la grandeur de fonctionnement électrique mesurée quant à une modification qui est causée du fait que l'élément de serrage mobile monte sur la pièce à serrer et
d3) l'arrêt du moteur électrique (10 ; 18 ; 31 ; 33) en cas d'atteinte d'une force de serrage déterminée,
**caractérisé en ce que** l'unité de commande réalise les étapes suivantes :
d4) le comptage des tours du moteur électrique (10 ; 18 ; 31 ; 33) à partir de la montée de la pièce et
d5) le calcul de la force de serrage à partir du nombre des tours du moteur électrique (10 ; 18 ; 31 ; 33) et d'une ligne caractéristique de ressort prescrite.

2. Dispositif de serrage (1 ; 16 ; 22 ; 32) selon la revendication 1, **caractérisé en ce que,**
a) l'élément de serrage (2 ; 17 ; 25, 26 ; 38) est déplacé pour un processus de serrage dans un sens de serrage déterminé,
b) le premier élément de ressort (9 ; 30 ; 39) presse l'élément de serrage (2 ; 25, 26 ; 38) avec une force de ressort déterminée dans le sens inverse au sens de serrage ou dans le sens de serrage,
c) la force de ressort du premier élément de serrage (2 ; 25, 26 ; 38) est sensiblement la même que la force de serrage qu'exerce l'élément de serrage (2 ; 25, 26 ; 38) sur la pièce.

3. Dispositif de serrage (1) selon la revendication 1 ou 2, **caractérisé par**
un second élément de ressort (15) qui est chargé pour un processus de desserrage et déchargé pour un processus de serrage,
le second élément de ressort (15) formant pour un processus de desserrage de préférence une liaison par friction entre le moteur électrique (10) et l'élément de serrage (2).

4. Dispositif de serrage (1) selon la revendication 3, **caractérisé en ce que**
a) le dispositif de serrage est un élément de serrage pivotant (1),
b) l'élément de serrage (2) est mobile linéairement pour le serrage ou le desserrage de la pièce le long d'un sens de serrage,
c) l'élément de serrage (2) est pivotant dans l'état desserré,
d) la liaison par friction entre le moteur électrique (10) et l'élément de serrage (2) provoque un mouvement pivotant de l'élément de serrage (2).

5. Dispositif de serrage (1) selon l'une quelconque des revendications précédentes, **caractérisé par**
a) un piston mobile axialement (2) qui porte l'élément de serrage,
b) un écrou de broche (6) relié au piston (2),
c) une broche (7) entraînée en rotation par le moteur électrique (10), qui s'engage dans l'écrou de broche (6) et convertit un mouvement de rotation du moteur électrique (10) en un mouvement linéaire du piston (2) et ainsi aussi de l'élément de serrage,
d) la liaison entre l'écrou de broche (6) et la broche (7) étant de préférence autobloquante,
e) une commande par coulisse étant de préférence prévue, laquelle ne permet au début d'un processus de serrage et à la fin d'un processus de desserrage qu'un mouvement pivotant de l'élément de serrage (2) et permet sinon seulement un mouvement linaire de l'élément de serrage (2).

6. Dispositif de serrage selon l'une quelconque des revendications précédentes, **caractérisé en ce que**
a) l'unité de commande termine un processus de serrage en fonction de la grandeur de fonctionnement électrique mesurée du moteur électrique (10 ; 18 ; 31 ; 33), le processus de serrage étant terminé lorsque la grandeur de fonctionnement électrique mesurée correspond à la force de serrage souhaitée et/ou
b) l'unité de commande termine un processus de desserrage en fonction de la grandeur de fonctionnement électrique mesurée du moteur électrique (10 ; 18 ; 31 ; 33), le processus de desserrage étant terminé lorsque la grandeur de fonctionnement électrique mesurée correspond à une force de friction souhaitée de la liaison par friction entre le moteur électrique et l'élément de serrage.

7. Dispositif de serrage selon l'une quelconque des revendications précédentes, **caractérisé en ce que** le dispositif de serrage travaille
a) seulement en traction ou
b) seulement en poussée ou
c) en traction ou poussée.

8. Procédé de commande pour un dispositif de serrage (1 ; 16 ; 22 ; 32) avec un élément de serrage mobile (2 ; 17 ; 25, 26 ; 38) pour le serrage d'une pièce, un moteur électrique (10 ; 18 ; 31 ; 33) pour l'entraînement mécanique de l'élément de serrage (2 ; 17 ; 25, 26 ; 38), un premier élément de ressort (9 ; 30 ; 39) qui est chargé pour un processus de serrage et déchargé pour un processus de desserrage, ainsi qu'avec une unité de commande pour la commande du moteur électrique (10 ; 18 ; 31 ; 33),
avec les étapes suivantes :
a) la détection d'une grandeur de fonctionnement électrique du moteur électrique (10 ; 18 ; 31 ; 33) comme mesure pour la force de serrage,
b) la vérification de la grandeur de fonctionnement électrique mesurée quant à une modification qui est causée du fait que l'élément de serrage mobile monte sur la pièce à serrer,
c) l'arrêt du moteur électrique (10 ; 18 ; 31 ; 33) lors de l'atteinte d'une force de serrage déterminée,
**caractérisé par** les étapes suivantes :
d) le comptage des tours du moteur électrique (10 ; 18 ; 31 ; 33) à partir de la montée sur la pièce,
e) le calcul de la force de serrage à partir du nombre de tours du moteur électrique (10 ; 18 ; 31 ; 33) et d'une ligne caractéristique de ressort prescrite.

9. Procédé de commande selon la revendication 8, **caractérisé en ce que** le dispositif de serrage (1) est un élément de serrage pivotant (1) et pour un processus de serrage, les étapes suivantes sont réalisées :
a) le démarrage du moteur électrique (10) avec une vitesse de rotation faible pour le pivotement de l'élément de serrage (2) dans une position de serrage en utilisant une liaison par friction entre le moteur électrique (10) et l'élément de serrage (2) et/ou
b) le fonctionnement du moteur électrique (10) avec une vitesse de rotation faible pour le détachement d'une liaison par friction entre le moteur électrique (10) et l'élément de serrage (2) et/ou
c) la mesure de la grandeur de fonctionnement électrique du moteur électrique (10) pendant le processus de serrage et/ou
d) la vérification si la grandeur de fonctionnement électrique mesurée indique que la liaison par friction entre le moteur électrique (10) et l'élément de serrage (2) est détachée et/ou
e) l'augmentation de la vitesse de rotation du moteur électrique (10) lorsque la liaison par friction entre le moteur électrique (10) et l'élément de serrage (2) est détachée et/ou
f) la mesure de la grandeur de fonctionnement électrique du moteur électrique (10) pendant le processus de serrage et/ou
g) la vérification si la grandeur de fonctionnement électrique mesurée indique que l'élément de serrage (2) est monté sur la pièce et/ou
h) la réduction de la vitesse de rotation du moteur électrique (10) lorsque l'élément de serrage (2) est monté sur la pièce,
i) le serrage du premier élément de ressort (9) et/ou
j) la mesure de la grandeur de fonctionnement électrique du moteur électrique (10) pendant le processus de serrage et/ou
k) la vérification si la grandeur de fonctionnement électrique mesurée indique que la force de serrage souhaitée est atteinte,
l) l'arrêt du moteur électrique (10) lorsque la force de serrage souhaitée est atteinte.

10. Procédé de commande selon la revendication 8 ou 9, **caractérisé en ce que** le dispositif de serrage (1) est un élément de serrage pivotant (1) et pour un processus de desserrage, les étapes suivantes sont réalisées :
a) le démarrage du moteur électrique (10) avec une vitesse de rotation faible pour la suppression de la force de serrage et/ou
b) la mesure de la grandeur de fonctionnement électrique du moteur électrique (10) pendant le processus de desserrage et/ou
c) la vérification si la grandeur de fonctionnement électrique mesurée indique que la force de serrage est supprimée et/ou
d) l'augmentation de la vitesse de rotation du moteur électrique (10) lorsque la force de serrage est supprimée et/ou
e) la mesure de la grandeur de fonctionnement électrique du moteur électrique (10) pendant le processus de desserrage et/ou
f) l'augmentation de la friction entre le moteur électrique (10) et l'élément de serrage (2) par le serrage du second élément de ressort (15) et/ou
g) le pivotement de l'élément de serrage (2) dans la position de desserrage avec une faible vitesse de rotation et/ou,
h) une autre augmentation de la friction entre le moteur électrique (10) et l'élément de serrage (2) et/ou,
i) la vérification si la grandeur de fonctionnement électrique mesurée indique que la liaison par friction entre le moteur électrique (10) et l'élément de serrage (2) présente une force de friction souhaitée et/ou
j) l'arrêt du moteur électrique (10) lorsque la force de friction souhaitée est atteinte.

11. Procédé de commande selon la revendication 8, **caractérisé en ce que** le dispositif de serrage (32) est un cylindre à bloc (32) et pour un processus de serrage, les étapes suivantes sont réalisées :
a) le démarrage du moteur électrique (33) avec une vitesse de rotation faible pour le détachement d'une liaison par friction entre le moteur électrique (33) et l'élément de serrage (38) et/ou
b) la mesure de la grandeur de fonctionnement électrique du moteur électrique (33) pendant le processus de serrage et/ou
c) la vérification si la grandeur de fonctionnement électrique mesurée indique que la liaison à force entre le moteur électrique (33) et l'élément de serrage (38) est détachée et/ou
d) l'augmentation de la vitesse de rotation du moteur électrique (33) lorsque la liaison par friction entre le moteur électrique (33) et l'élément de serrage (38) est détachée et/ou
e) la mesure de la grandeur de fonctionnement électrique du moteur électrique (33) pendant le processus de serrage et/ou
f) la vérification si la grandeur de fonctionnement électrique mesurée indique que l'élément de serrage (38) est monté sur la pièce et/ou
g) la réduction de la vitesse de rotation du moteur électrique (33) lorsque l'élément de serrage (38) est monté sur la pièce et/ou
h) le serrage de l'élément de serrage (39), et/ou
i) la mesure de la grandeur de fonctionnement électrique du moteur électrique (33) pendant le processus de serrage et/ou
j) la vérification si la grandeur de fonctionnement électrique mesurée indique que la force de serrage souhaitée est atteinte,
k) l'arrêt du moteur électrique (33) lorsque la force de serrage souhaitée est atteinte.

12. Procédé de commande selon la revendication 8 ou 11, **caractérisé en ce que** le dispositif de serrage (32) est un cylindre à bloc (32) et pour un processus de desserrage, les étapes suivantes sont réalisées :
a) le démarrage du moteur électrique (33) avec une vitesse de rotation faible pour la suppression de la force de serrage et/ou
b) la mesure de la grandeur de fonctionnement électrique du moteur électrique (33) pendant le processus de desserrage et/ou
c) la vérification si la grandeur de fonctionnement électrique mesurée indique que la force de serrage est supprimée et/ou
d) l'augmentation de la vitesse de rotation du moteur électrique (33) lorsque la force de serrage est supprimée et/ou
e) la mesure de la grandeur de fonctionnement électrique du moteur électrique (33) pendant le processus de desserrage et/ou
f) le serrage de l'élément de ressort (39) et/ou
g) la mesure de la grandeur de fonctionnement électrique du moteur électrique (33) pendant le processus de desserrage et/ou
h) la vérification si la grandeur de fonctionnement électrique mesurée indique que la force de desserrage souhaitée est atteinte et/ou
i) l'arrêt du moteur électrique (33) lorsque la force de desserrage souhaitée est atteinte.

13. Procédé de commande selon la revendication 8, **caractérisé en ce que** le dispositif de serrage (22) est un étau de machine (22) et pour un processus de serrage, les étapes suivantes sont réalisées :
a) le démarrage du moteur électrique (31) avec une vitesse de rotation élevée et/ou
b) la mesure de la grandeur de fonctionnement électrique du moteur électrique (31) pendant le processus de serrage et/ou
c) la vérification si la grandeur de fonctionnement électrique mesurée indique que l'élément de serrage (25, 26) est monté sur la pièce et/ou
d) la diminution de la vitesse de rotation du moteur électrique (31) lorsque l'élément de serrage (25, 26) est monté sur la pièce et/ou
e) le serrage de l'élément de ressort (30) et/ou
f) la mesure de la grandeur de fonctionnement électrique du moteur électrique (31) pendant le processus de serrage et/ou
g) la vérification si la grandeur de fonctionnement électrique mesurée indique que la force de serrage souhaitée est atteinte et/ou
h) l'arrêt du moteur électrique (31) lorsque la force de serrage souhaitée est atteinte.

14. Procédé de commande selon la revendication 8 ou 13, **caractérisé en ce que** le dispositif de serrage (22) est un étau de machine (22) et pour un processus de desserrage, les étapes suivantes sont réalisées :
a) le démarrage du moteur électrique (31) avec une vitesse de rotation faible pour la suppression de la force de serrage et/ou
b) la mesure de la grandeur de fonctionnement électrique du moteur électrique (31) pendant le processus de desserrage et/ou
c) la vérification si la grandeur de fonctionnement électrique mesurée indique que la force de serrage est supprimée et/ou
d) l'augmentation de la vitesse de rotation du moteur électrique (31) lorsque la force de serrage est supprimée et/ou
e) la mesure de la grandeur de fonctionnement électrique du moteur électrique (31) pendant le processus de desserrage et/ou
f) le déplacement dans la position de desserrage défini par la course ou par un commutateur fin de course, l'arrêt du moteur électrique (31).

15. Procédé de commande selon la revendication 8, **caractérisé en ce que** le dispositif de serrage (16) est un élément d'appui (16) et pour un processus de serrage les étapes suivantes sont réalisées :
a) le démarrage du moteur électrique (18) avec une vitesse de rotation élevée et/ou
b) la mesure de la grandeur de fonctionnement électrique du moteur électrique (18) pendant le processus d'appui et/ou
c) lors de l'atteinte de la position d'arrêt anticipé, la réduction de la vitesse de rotation du moteur électrique (18) et/ou
d) la mesure de la grandeur de fonctionnement électrique du moteur électrique (18) pendant le processus d'appui et/ou
e) la vérification si la grandeur de fonctionnement électrique mesurée indique que l'élément de serrage (17) est monté sur la pièce, si oui l'arrêt immédiat du moteur électrique (18) et/ou
f) la vérification si le couplage par friction est déclenché, si oui l'arrêt immédiat du moteur électrique (18).
